Europäisches Patentamt

European Patent Office

Office européen des brevets

(11) Veröffentlichungsnummer: **0 140 821**
A2

# (12) EUROPÄISCHE PATENTANMELDUNG

(21) Anmeldenummer: 84730090.2

(22) Anmeldetag: 24.08.84

(51) Int. Cl.⁴: **G 02 B 6/42**

(30) Priorität: 24.08.83 DE 3330901

(43) Veröffentlichungstag der Anmeldung: 08.05.85
Patentblatt 85/19

(84) Benannte Vertragsstaaten: **AT BE CH DE FR GB IT LI LU NL SE**

(71) Anmelder: **Heinrich-Hertz-Institut für Nachrichtentechnik Berlin GmbH, Einsteinufer 37, D-1000 Berlin 10 (DE)**

(72) Erfinder: **Peters, Klaus, Dipl.-Ing., Westendallee 98 c, D-1000 Berlin 19 (DE)**

(74) Vertreter: **Wolff, Konrad, Heinrich-Hertz-Institut für Nachrichtentechnik Berlin GmbH Einsteinufer 37, D-1000 Berlin 10 (DE)**

(54) Justiervorrichtung für die Feinsteinstellung der optischen Kopplung zwischen zwei optischen Elementen und Verwendung der Justiervorrichtung für einen Halbleiterlaser und einen faserförmigen Lichtwellenleiter.

(57) Justiervorrichtung für die Feinsteinstellung der optischen Kopplung zwischen zwei optischen Elementen und Verwendung der Justiervorrichtung für einen Halbleiterlaser und einen faserförmigen Lichtwellenleiter.

Für monomodale optische Sender sind spezielle Justiervorrichtungen bisher noch nicht handelsüblich. Für andere Zwecke konzipierte Verstellvorrichtungen sind nicht nur sehr teuer, sondern auch zu voluminös.

Die Justiervorrichtung gemäss der Erfindung hat einen Raumbedarf von ca. 50 cm³, d.h. eine axiale Länge von etwa 40 mm und eine Fläche von ca. 12,5 cm². Sie enthält im wesentlichen eine Grundplatte (16), eine Rohrschlitzfeder (1) und eine Taumelscheibe (9). Der Laser (15) ist räumlich feststehend an einer Seite der Grundplatte (16) befestigt, an der anderen Seite ist — in allen drei Raumrichtungen verstellbar — die Monomodefaser (5) an der Taumelscheibe (9) gehaltert. Über Grobstellschrauben (2) sowie Feinstellschrauben (8, 10) und Hebel (4) mit Biegefedergelenken (11) erfolgt die Raumzentrierung auf 0,5 μm genau in kleinen, kippenden Bewegungen.

HEINRICH-HERTZ-INSTITUT FÜR NACHRICHTENTECHNIK BERLIN GMBH                                    12/0883 EP

Justiervorrichtung für die Feinsteinstellung der optischen Kopplung zwischen zwei optischen Elementen und Verwendung der Justiervorrichtung für einen Halbleiterlaser und einen faserförmigen Lichtwellenleiter

Die Erfindung bezieht sich auf eine Justiervorrichtung für die Feinsteinstellung der optischen Kopplung zwischen einem ersten Element, das räumlich feststehend angeordnet ist, und einem zweiten Element, das in allen drei Raumrichtungen verstellbar, insbesondere in der Ebene senkrecht zur optischen Achse schwenkbar gehaltert ist, sowie auf die Verwendung dieser Justiervorrichtung für die optische Kopplung eines Halbleiterlasers mit einem faserförmigen Lichtwellenleiter.

In der optischen Nachrichtentechnik gewinnen Monomode-Systeme zunehmend an Bedeutung. Zu den dabei zu lösenden Problemen gehört die Einkopplung der vom Laser emittierten Strahlung in den Lichtwellenleiter. Dies erfordert infolge der Abmessungen von rechteckigen oder quadratischen Abstrahlflächen bei Halbleiter-Monomodelasern mit Kantenlängen zwischen etwa 0,5 µm bis 5 µm und Kerndurchmessern von Monomodefasern von ebenfalls etwa 5 µm sehr hohe Präzision, nämlich eine Einstellgenauigkeit von etwa 0,5 µm.

Für monomodale optische Sender sind derart fein einstellbare Justiervorrichtungen bisher nicht handelsüblich. Es sind allerdings Präzisions-Manipulatoren mit 0,5 µm und 0,1 µm Vortrieb (Fa. Dr. Kubelik OHG, Karlsruhe), Justierfassungen und Spiegelhalter mit kardanisch aufgehängten Innenfassungen (Fa. Spindler & Hoyer, Göttingen) sowie weitere Konstruktionen erhältlich, die zwar von der Einstellempfindlichkeit her durchaus in Betracht kommen, aber an sich für andere optische Anwendungsgebiete gedacht sind. Hierauf dürfte z. B. auch zurückzuführen sein, daß derartige bekannte Einrichtungen sowohl verhältnismäßig teuer als auch insbesondere großvolumig sind.

Der Erfindung liegt die Aufgabenstellung zugrunde, eine Justiervorrichtung zu schaffen, bei der alle erforderlichen Teile kompakt und miniaturisiert auf kleinstem Raum zusammengefaßt sein können, die Handhabung dennoch leicht möglich ist, bei der der Herstellungsaufwand gering ist und die eine Einstellgenauigkeit von etwa 0,5 µm gewährleistet. Gemäß der Erfindung wird dies erreicht durch eine Grundplatte, an der das räumlich feststehende Element, die optische Achse des Systems bestimmend, sowie eine Taumelscheibe befestigt sind, die sich über eine Rohrschlitzfeder an der Grundplatte abstützt und die Halterung für das räumlich verstellbare optische Element trägt.

Die komplette Justiervorrichtung gemäß der Erfindung hat einen Raumbedarf von etwa 50 cm$^3$, nämlich eine axiale Länge von etwa 40 mm und eine Fläche der Grundplatte von etwa 12,5 cm$^2$. Das sind etwa 5 % des Raumbedarfs, der für bekannte Konstruktionen mit je ca. 100 mm in allen drei Raumachsen erforderlich ist. Ein weiterer, wesentlicher Vorteil liegt darin, daß keine extremen Herstellungstoleranzen gefordert werden müssen. Die Ausgangsposition der fertig zusammengesetzten Justiervorrichtung ist nach Augenmaß einzustellen, trotzdem gelingt es ohne Mühe, die Feinsteinstellung wie gefordert auf 0,5 µm genau auszuführen. Aus anwendungstechnischer, funktioneller Sicht ergibt sich mit der Kleinheit der Justiervorrichtung gemäß der Erfindung ein weiterer Vorteil: Häufig ist eine Temperaturregelung bei einem optischen Element erforderlich, um einmal eingestellte optische Eigenschaften stabil zu halten. Das geringe Volumen der Justiervorrichtung beeinträchtigt eine solche Temperaturregelung weder hinsichtlich des Leistungsbedarfs noch hinsichtlich der Stabilität in wesentlichem Umfang. Hinzu kommt, daß sich Temperaturänderungen infolge des kompakten Aufbaus in der gesamten Justiervorrichtung ziemlich gleichmäßig auswirken und deshalb zu keinen unerwünschten Änderungen einer einmal eingestellten Position der optischen Elemente zueinander führen. Dies gilt insbesondere für Auslenkungen infolge von Temperatureinflüssen in radialer Richtung. Für Auslenkungen infolge Wärmedehnung in axialer Richtung kann durch entsprechende Wahl der Werkstoffe für die in dieser Hinsicht maßgeblich beteiligten Vorrichtungsteile eine Kompensation herbeigeführt werden, so daß das räumlich feststehend angeordnete und das verstellbare Element ihre gegenseitige Lage auch unter Temperatureinfluß beibehalten.

Für die Erfindung und ihre Ausführungsformen ist von grundlegender, wesentlicher Bedeutung, daß die gewünschte Raumzentrierung des verstellbaren optischen Elements in allen drei Richtungen des Raumes allein mittels der Taumelscheibe in der geforderten Genauigkeit herbeigeführt werden kann. Da die Taumelscheibe bei gleichartiger Betätigung ihrer Stellelemente ihre Lage nicht taumelnd, also als Sonderfall rein translatorisch in Richtung der optischen Achse verändert, kann auf diese Weise also auch die Länge des Weges auf der optischen Achse eingestellt werden. Bei unterschiedlicher Betätigung der Stellelemente der Taumelscheibe wandert das verstellbare optische Element, vergleichbar mit einer kardanischen Aufhängung, im wesentlichen in der zur optischen Achse senkrechten Ebene.

Bevorzugte Ausführungsformen der Erfindung, auf die auch die Unteransprüche gerichtet sind, werden im Zusammenhang mit der Figurenbeschreibung nachfolgend noch näher erläutert. In der schematischen Darstellung zeigen:

Fig. 1: eine Justiervorrichtung im Axialschnitt;
Fig. 2: die Grundplatte der Justiervorrichtung gemäß Fig. 1 mit Taumelscheibe und deren Stellelementen, in perspektivischer Darstellung
und Fig. 3: eine als Stanzteil ausgebildete Grundplatte für eine Justiervorrichtung gemäß Fig. 1, und zwar als Abwicklung des Stanzteils dargestellt.

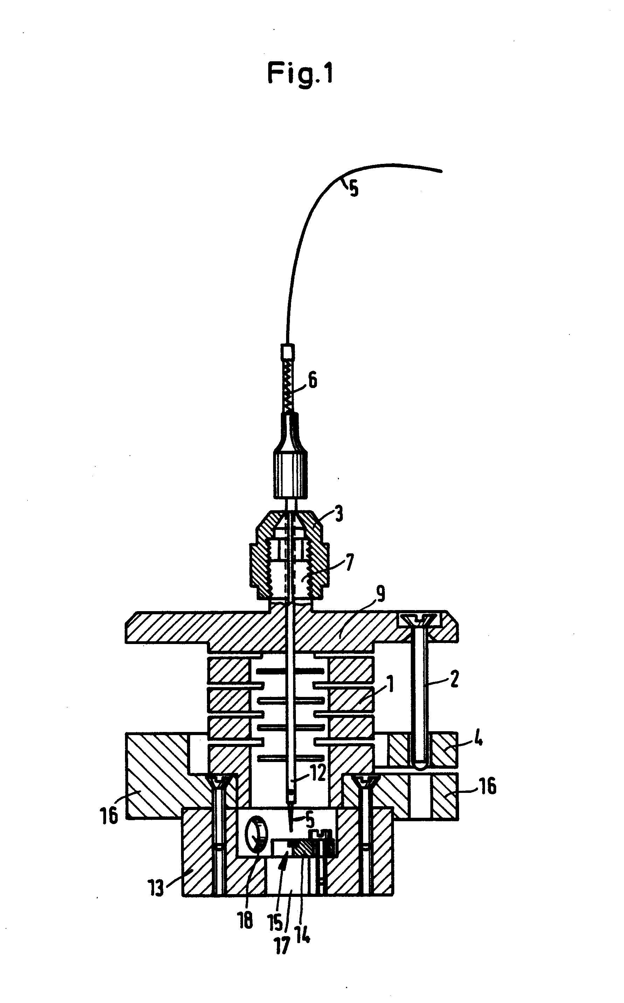

Der Fig. 1 kann der Aufbau und weitgehend auch bereits die Funktionsweise der Justiervorrichtung gemäß der Erfindung entnommen werden. Diese wird hier für die bevorzugte Verwendung zur optischen Kopplung eines Halbleiterlasers als räumlich feststehend angeordnetes optisches Element 15 mit einem faserförmigen Lichtwellenleiter als in allen drei Raumrichtungen verstellbares optisches Element 5 aufgezeigt. Es ist jedoch ohne weiteres erkennbar, daß ebenso andere Verwendungen möglich und vorteilhaft sind, wobei auch keine Beschränkung auf die Justierung optischer Elemente bezüglich deren Stirnflächen gegeben ist.

In der Figurenbeschreibung werden, zum besseren Verständnis und zur leichteren Vergleichsmöglichkeit zwischen Figurenbeschreibung und den Ansprüchen die Bezugsziffer "15" sowohl allgemein für das räumlich feststehende Element als auch speziell für einen Laser und die Bezugsziffer "5" sowohl allgemein für das räumlich verstellbare Element als auch speziell für einen faserförmigen Lichtwellenleiter - abgekürzt: LWL - verwendet.

Bei dem LWL 5 handelt es sich z.B. um eine Monomodefaser mit 6 µm Kerndurchmesser, die an der Endfläche präpariert ist, insbesondere zu einem konischen Taper ausgezogen und mit einer Sammellinse versehen ist. Um dem LWL 5 für die Einstellung die erforderliche Steifigkeit zu verleihen, wird eine Hülse 12 aufgeschoben und am LWL 5 befestigt, z.B. geklebt.

Die Hülse 12 mit dem LWL 5 wird von einer Spannzange 7 aufgenommen und läßt sich dort, nach Augenmaß, solange stetig in axialer Richtung verschieben, bis die Endfläche des LWL 5 etwa die richtige Position einnimmt. Mittels einer Überwurfmutter 3 erfolgt dann eine lösbare Befestigung des räumlich verstellbaren optischen Elements 5 in der Justiervorrichtung.

Die Grundplatte 16 bildet eine starre Einheit mit der Halterung 13 für den Laser 15. Freimachungen, insbesondere ein axial in der Halterung 13 angeordnetes Fenster 17 ermöglichen die Beobachtung und/oder die Beeinflussung der optischen Eigenschaften des Lasers 15, beispielsweise mittels eines auf die Rückstrahlfläche des Lasers 15 gerichteten Hohlspiegels, mit dem die Monomode-Eigenschaften verbessert werden. Außer einer solchen gezielten Beeinflussung dient das Fenster 17 der Kontrolle der Laserlichtintensität. Zur Beobachtung der gegenseitigen Lage des Lasers 15 und des LWL 5 in der zur axialen Richtung senkrechten Ebene sind mindestens zwei weitere radial in der Halterung 13 angeordnete Fenster 18 vorgesehen.

Die Feineinstellung - oder als erster Schritt der Feinsteinstellung auch als Grobjustierung anzusehen - erfolgt mittels Grobstellschrauben 2. Unter naturgesetzlichen Gesichtspunkten ist es sinnvoll und zweckmäßig, drei Grobstellschrauben 2 vorzusehen, selbstverständlich sind auch vier oder fünf Grobstellschrauben 2 oder jede im Bedarfsfall für zweckmäßig erachtete Anzahl möglich. Die Grobstellschrauben 2 halten - verstellbar - die Taumelscheibe 9 gegen eine Rohrschlitzfeder 1 an der Grundplatte 16.

Diese Rohrschlitzfeder 1 spielt für die Justiervorrichtung gemäß der Erfindung und deren Ausführungsformen eine zentrale Rolle. Sie muß gegen Scherbewegungen möglichst steif sein und braucht in Richtung der Achse nur geringfügige, taumelnde Lageänderungen zuzulassen. Dies läßt sich beispielsweise mit rohrförmigen Metallkörpern erzielen, in deren Mantel, jeweils um $90^{\circ}$ gegeneinander versetzt und dabei in Schritten über die Länge verteilt, Schlitzpaare angebracht sind, wobei die Schlitze in Umfangsrichtung möglichst breiter sein sollten als die zwischen ihnen verbleibenden Stege. In axialer Richtung ist somit auf beiden Seiten eines Steges jeweils ein Schlitz vorhanden, so daß die gewünschten taumelnden Längsbewegungen, jedoch nicht oder zumindest doch nicht spürbar Torsions- oder Scherbewegungen ausgeführt werden können. Ähnlich gute Ergebnisse lassen sich auch mit Gummifederelementen oder dergleichen erzielen. Dies hängt natürlich von den jeweils gewünschten und geforderten Bedingungen ab.

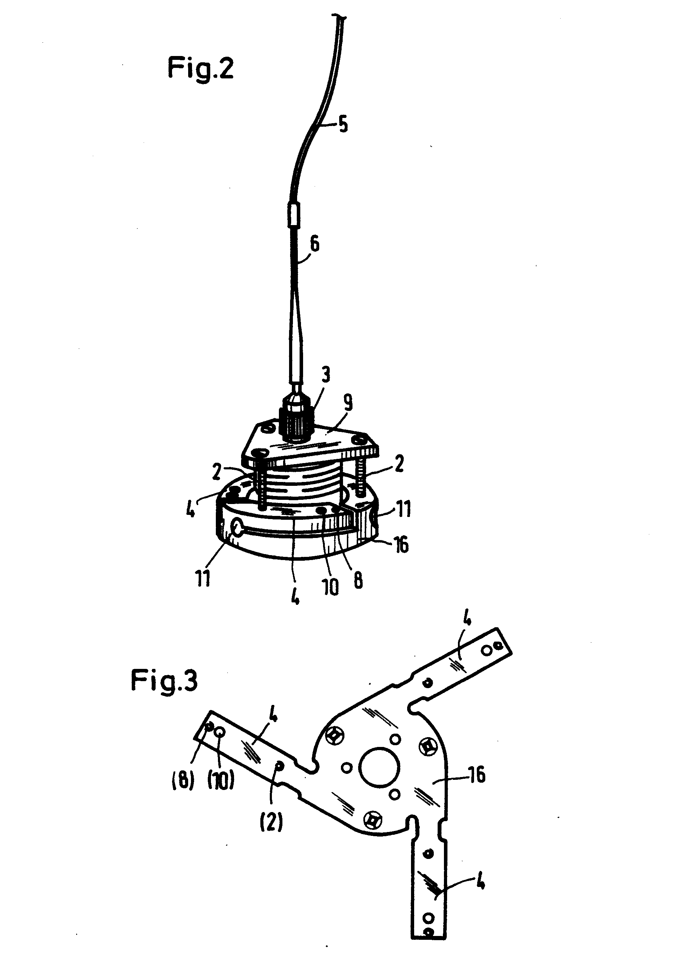

Wie insbesondere auch aus Fig. 2 zu entnehmen ist, sitzen die Grobstellschrauben 2 mit ihren Köpfen in der Taumelscheibe 9. Dies ermöglicht einerseits eine leichte Handhabung der Justiervorrichtung, führt andererseits aber auch zu einer vorteilhaften Lösung für die Feinsteinstellung, auf die nachfolgend noch näher eingegangen wird. Mit Halbkugelköpfen an den Grobstellschrauben 2 ergeben sich in einer zylindrischen oder kegeligen Lagerbohrung in der Taumelscheibe 9 Berührungskreise und damit eine schwenkbare Lagerung der Schraubenköpfe.

Die Mutterngewinde der Grobstellschrauben 2 befinden sich nicht nur schlechthin an der Grundplatte 16, sondern dort jeweils in Hebeln 4, die vorzugsweise als einarmige Hebel und darüber hinaus mit Biegefedergelenken 11 ausgebildet sind, also spielfreie Drehpunkte haben. Der Abstand eines Mutterngewindes für eine Grobstellschraube 2 vom Drehpunkt des betreffenden Hebels 4 ist klein. Etwa fünf- bis zehnmal größer ist der Abstand eines Paares von Feinstellschrauben 8, 10, von denen die eine als Zug-, die andere als Druckschraube im Hebel 4 geführt wird. Um die natürliche Mittellage des Hebels 4 kann mittels der Feinstellschrauben 8, 10 der Hebel 4 in der einen oder anderen Richtung bewegt werden, wobei diese Bewegung infolge einer geringen Steigung von z.B. O,3 mm pro Umdrehung sowie der Untersetzung durch den Hebel 4 sich sehr fein und präzis auf die betreffende Grobstellschraube 2 und dort in die Taumelscheibe 9 überträgt.

Durch abwechselnde Verstellung der Grob- und Feinstellglieder erfolgt die Zentrierung in jeweils mehr oder weniger kleinen Schritten von kippenden Bewegungen. Auch die Einstellung des Abstandes auf der optischen Achse wird durch derartige kippende Bewegungen herbeigeführt, da auch hierbei die Stellglieder abwechselnd, d.h. nicht gleichzeitig, betätigt werden. Für eine rein translatorische Bewegung sind alle betreffenden Stellglieder gleichartig zu betätigen, d.h. die Summe der einzelnen Kippbewegungen resultiert in einer translatorischen Verstellung mit der Richtung der optischen Achse des Systems.

Speziell im Hinblick auf den Hauptanwendungszweck der Erfindung, einen monomodalen Sender, sind in Fig. 1 noch am Laser 5 seine Wärmesenke 14 und am LWL 5 eine Knickschutzhülse 6 eingezeichnet.

In Fig. 3 ist schließlich dargestellt, daß eine Grundplatte 16 als preisgünstig herzustellendes Stanzteil ausgebildet sein kann. Die Hebel 4 können vor dem Umbiegen mit den Bohrungen bzw. Gewinden für die Grobstellschrauben 2 und Feinstellschrauben 8, 10 und die Grundplatte 16 mit solchen für die Befestigung einer Halterung 13 (s. Fig. 1) versehen werden. Als Stell- und Befestigungselemente können handelsübliche Schrauben verwendet werden. Selbst an Grobstellschrauben 2 können Halbkugelköpfe aus Kegel- oder Zylinderköpfen ohne Schwierigkeit auf der Drehbank erzeugt werden.

HEINRICH-HERTZ-INSTITUT FÜR NACHRICHTENTECHNIK BERLIN
GMBH                                    12/0883 EP


05 Patentansprüche

1. Justiervorrichtung für die Feinsteinstellung der optischen Kopplung zwischen einem ersten Element, das räumlich feststehend angeordnet ist, und einem zweiten Element, das in allen drei Raumrichtungen verstellbar, insbesondere in der Ebene senkrecht zur optischen Achse schwenkbar gehaltert ist,
g e k e n n z e i c h n e t   d u r c h
eine Grundplatte ( 16 ), an der das räumlich feststehende Element ( 15 ), die optische Achse des Systems bestimmend, sowie eine Taumelscheibe ( 9 ) befestigt sind, die sich über eine Rohrschlitzfeder ( 1 ) an der Grundplatte ( 16 ) abstützt und die Halterung für das räumlich verstellbare Element ( 5 ) trägt.

2. Justiervorrichtung nach Anspruch 1,
g e k e n n z e i c h n e t   d u r c h
eine lösbar an der Grundplatte ( 16 ) befestigte Halterung ( 13 ) für das räumlich feststehende optische Element ( 15 ).

3. Justiervorrichtung nach Anspruch 2,
g e k e n n z e i c h n e t   d u r c h
ein axial in der Halterung ( 13 ) angeordnetes Fenster ( 17 ) zur Beobachtung und/oder zur Beeinflussung der optischen Eigenschaften des feststehenden Elements ( 15 ).

4. Justiervorrichtung nach Anspruch 2 oder 3,
g e k e n n z e i c h n e t   d u r c h
mindestens zwei radial in der Halterung ( 13 ) angeordnete Fenster (18) zur Beobachtung der gegenseitigen Lage des feststehenden Elements ( 15 ) und des verstellbaren Elements ( 5 ).

5. Justiervorrichtung nach einem der Ansprüche 1 bis 4 , g e k e n n z e i c h n e t   d u r c h Grobverstellschrauben ( 2 ) mit Halbkugelkopf zwischen der Grundplatte (10) und der Taumelscheibe (9).

6. Justiervorrichtung nach Anspruch 4 oder 5, g e k e n n z e i c h n e t   d u r c h drei Grobverstellschrauben ( 2 ), jeweils um 120$^{\circ}$ gegeneinander versetzt.

7. Justiervorrichtung nach einem der Ansprüche 4 bis 6, g e k e n n z e i c h n e t   d u r c h eine Grundplatte ( 16 ) mit Hebeln ( 4 ), in denen sich jeweils für eine Grobverstellschraube ( 2 ) das Mutterngewinde befindet.

8. Justiervorrichtung nach Anspruch 7, g e k e n n z e i c h n e t   d u r c h einarmige Hebel ( 4 ) an der Grundplatte ( 16 ).

9. Justiervorrichtung nach Anspruch 7 oder 8, g e k e n n z e i c h n e t   d u r c h Hebel ( 4 ) mit Biegefedergelenken ( 11 ) an der Grundplatte ( 16 ).

10. Justiervorrichtung nach einem der Ansprüche 7 bis 9, g e k e n n z e i c h n e t   d u r c h zwei Feinstellschrauben ( 8, 10 ) in einem Hebel ( 4 ) mit geringer Steigung, beispielsweise 0,3 mm/360$^{\circ}$.

11. Justiervorrichtung nach einem der Ansprüche 7 bis 10, gekennzeichnet durch
ein Untersetzungsverhältnis bei einem Hebel ( 4 ) von
etwa 1: 5 bis 1 : 10.

12. Justiervorrichtung nach Anspruch 1,
gekennzeichnet durch
eine Metallhülse ( 12 ) als Halteorgan für das in allen
drei Raumrichtungen verstellbare optische Element ( 5 ).

13. Justiervorrichtung nach Anspruch 12,
gekennzeichnet durch
eine Spannzange ( 7 ) mit Überwurfmutter ( 3 ) an der
Taumelscheibe ( 9 ) für das Halteorgan des verstellbaren optischen Elements ( 5 ).

14. Justiervorrichtung nach Anspruch 12,
gekennzeichnet durch
eine Knickschutzhülse ( 6 ) an dem nach außen führenden Ende des Halteorgans für das verstellbare optische
Element ( 5 ).

15. Justiervorrichtung nach einem der Ansprüche
1 bis 14,
gekennzeichnet durch
eine kreisringförmige Grundplatte ( 16 ).

16. Justiervorrichtung nach Anspruch 15,
gekennzeichnet durch
eine als Stanzteil hergestellte Grundplatte ( 16 ).

17. Verwendung einer Justiervorrichtung nach einem der
Ansprüche 1 bis 16 zur optischen Kopplung eines Halbleiterlasers als räumlich feststehend angeordnetes optisches Element ( 15 ) mit einem faserförmigen Lichtwellenleiter als in allen drei Raumrichtungen verstellbares optisches Element ( 5 ).

## Fig.1

Fig.2

Fig.3